Europäisches Patentamt

(19) European Patent Office (11) Publication number: **0 044 684**

Office européen des brevets **B1**

(12) **EUROPEAN PATENT SPECIFICATION**

(45) Date of publication of patent specification: **24.10.84** (51) Int. Cl.³: **G 21 C 21/02**

(21) Application number: **81303199.4**

(22) Date of filing: **13.07.81**

(54) **Pellet workpiece container boat loading apparatus.**

(30) Priority: **22.07.80 US 171062**

(43) Date of publication of application:
**27.01.82 Bulletin 82/04**

(45) Publication of the grant of the patent:
**24.10.84 Bulletin 84/43**

(84) Designated Contracting States:
**BE CH DE FR GB IT LI SE**

(56) References cited:
**GB-A-1 315 875**
**GB-A-1 577 408**
**GB-A-2 022 309**
**US-A-3 127 721**
**US-A-3 907 123**
**US-A-3 940 908**
**US-A-3 948 018**
**US-A-4 066 534**

(73) Proprietor: **WESTINGHOUSE ELECTRIC CORPORATION**
**Westinghouse Building Gateway Center**
**Pittsburgh Pennsylvania 15222 (US)**

(72) Inventor: **Marmo, Anthony Robert**
**102 Wye Oake Drive**
**Cheswick Pennsylvania (US)**
Inventor: **Huggins, Thomas Bourne**
**239 Barmount Drive**
**Columbia South Carolina (US)**

(74) Representative: **van Berlyn, Ronald Gilbert**
**23, Centre Heights**
**London, NW3 6JG (GB)**

## Description

An operational step in the nuclear fuel fabrication process is the loading of green pellet workpieces coming from the pelleting press into sintering container boats in preparation for high-temperature firing of the pellet workpieces in a sinter furnace. This operation requires careful handling of the pellet workpieces, because the pellets at this time are fragile and susceptible to damage.

It is known in the prior art to load pellet workpieces into sintering boats by a gravity discharge from the pellet press down a chute into the sintering boat and there manually replacing the sintering boats as each boat becomes filled. This method has the disadvantage of allowing pellet to pellet impact and has considerable potential for pellet damage. In addition, random orientation of the pellets in each sintering container boat reduces the loading density and therefore reduces the high-temperature firing production capacity.

In addition, a mechanized boat loader is known in the prior art, including a pick and place mechanism with mechanical blades or jaws to pick up a single row of pellet workpieces at a time and transfer that row into the sintering container boat. This mechanized boat loader requires frequent attention and is production limiting, because of the single row transfer concept being time consuming and the effort required to maintain this mechanized boat loader operational. Also, the boats are repeatedly used for sintering pellets in a furnace where they are exposed to high temperatures such that they may become warped. Such warped boats however will not only alter their interior space for accommodating the pellets, but may cause blockages in the furnace that may result in damages not only to the pellets in the respective boat but to all the pellets in the furnace.

It is the principal object of the present invention to provide a green nuclear fuel pellet loading apparatus capable of loading large amounts of green pellets into sintering boats without damaging the relatively sensitive pellets during loading or during the sintering process.

With this object in view, the present invention resides in an apparatus for receiving nuclear fuel green pellets from an input supply and for loading those pellets into a container for passing the pellets in said container through a sintering furnace, characterized by sensing means for checking the dimensions of the container to establish that the container is empty and not warped from earlier passes through the furnace, means including a holding member for collecting a plurality of pellet rows on said holding member with a plurality of pellets in each row, means for moving said plurality of pellet rows into said container so as to provide a layer of pellets within the container and means responsive to a desired number of operations of said pellet row moving means for releasing said container to permit its movement away from said apparatus when a predetermined number of pellet layers is provided within the container.

The invention will become more readily apparent from the following description of a preferred embodiment thereof shown, by way of example only, in the accompanying drawings, in which:

Figures 1A and 1B are side views of the present pellet workpiece container loading apparatus;

Figs. 2A and 2B are top views of the apparatus shown in Fig. 1;

Fig. 3 schematically shows the programmable controller of the present invention coupled with the provided input limit switches and the output actuator devices which are in turn coupled with the pellet workpiece loading apparatus;

Figs. 4A, 4B and 4C show the sequentially operative control program for the programmable controller shown in Fig. 3;

Fig. 5 is a top view of the workpiece row pusher and associated apparatus;

Fig. 6 is a side view of the apparatus shown in Fig. 5;

Fig. 7 shows the apparatus of Fig. 6 with the workpieces moved forward one desired row spacing distance on the holding tray;

Fig. 8 shows the transfer head lowered into a container boat; and

Fig. 9 shows the transfer head with a warped empty boat that is removed without the loading of pellet workpieces.

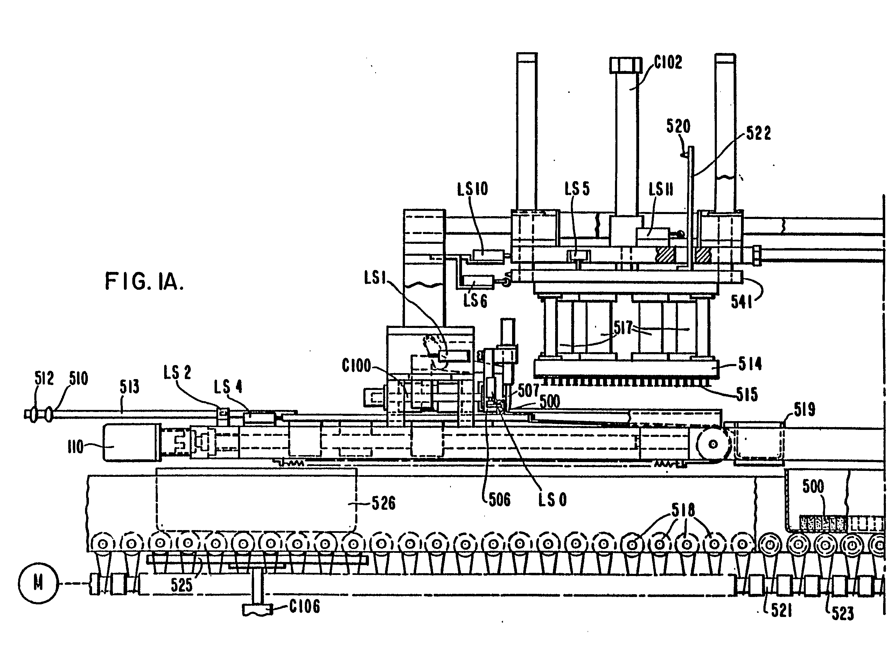

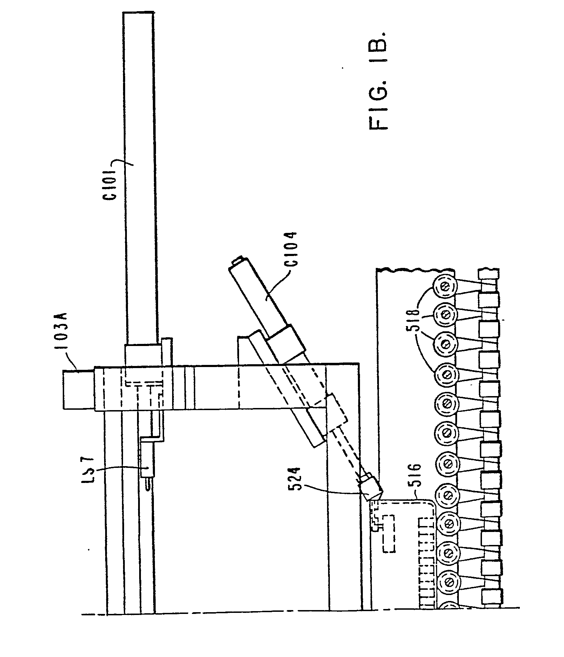

The apparatus shown in Figs. 1A and 1B consists of a pellet workpiece container boat loading apparatus mounted over a conveyor carrying sintering container boats 519 for loading in preparation for a subsequent sintering furnace heat treatment. The apparatus is operative to check the boat's physical shape before loading pellet workpieces to assure that the boat will be acceptable, that is in proper shape, and empty for this purpose. If the empty boat is not acceptable, it is released and passed away from the loading station and a new boat is indexed into place at the loading station and checked to determine its acceptability and satisfactory condition for the loading of pellet workpieces. The loading apparatus has a pellet workpiece accumulator portion that accepts green pellet workpieces in a continuous stream single file standing on end from a previous pellet press operation. As succeeding preset lengths of pellet workpieces are accumulated in respective rows, each row is indexed laterally onto a holding tray and this accumulation operation is continued until a desired matrix array of pellet workpieces is accumulated equivalent to a desired layer for loading in the boat.

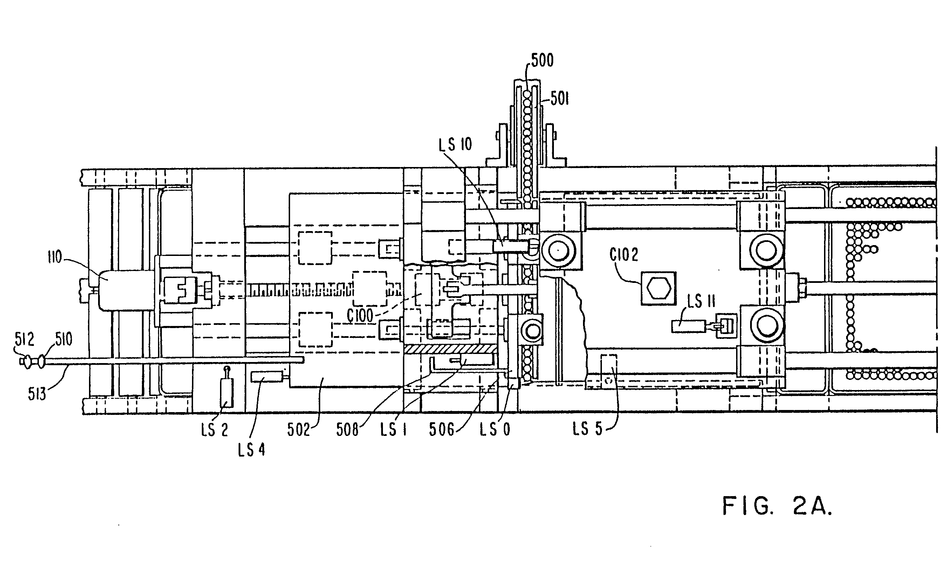

In Fig. 1A, the input pellet workpieces 500 are positioned in a row between a pusher member 506 and an extension wall 507. When a full row of pellet workpieces has been accumulated between the pusher 506 and the extension wall 507, a limit switch LS 0 is actuated to cause a pusher cylinder C100 to move the pusher 506 in a direction to the right thereby laterally moving the row of pellet workpieces 500 along the holding tray 502 (Fig. 2A). A limit switch LS 1, shown in Fig. 2A, operates when a desired movement distance has been provided for the row of pellet workpieces 500 and which limit switch LS 1 energizes a tray index motor 110 to move the holding tray 502 including the newly positioned row of workpieces 500 to the right a predetermined distance desired as the spacing between adjacent rows of pellet workpieces 500. This pellet workpiece row accumulation operation and position indexing is successively repeated for each row. When a preselected matrix array of rows of pellet workpieces 500 is formed on the holding tray 502, the cam 510 carried by arm 513 fastened to the holding tray 502 operates the limit switch LS 2 for operating the tray index motor 110 to move the holding tray 502 to the right to a loading position under the transfer head 514 in which position a cam 512 carried by the arm 513 cooperates with the limit switch LS 2 to cause a vertical cylinder C102 to lower a transfer head 514 and a support member 541. Pickup orifice nozzles 515 carried by the transfer head 514 come into contact with the array of pellet workpieces 500 on the holding tray 502. The transfer head 514 is operative with vacuum educators 517 coupled with the pickup orifice nozzles 515 to provide a vacuum and cause the individual workpieces to adhere to the nozzles 515 of the transfer head 514. The transfer head 514 is then raised by the vertical cylinder C102 until an uppermost position as sensed by a limit switch LS 5 to cause a horizontal cylinder C101 to move the transfer head 514 to the right and above an empty container boat 516. The container boat 516 is in a loading position on conveyor rollers 518 and held in position by a retaining cylinder C104 operative with a retaining member 524. The transfer head 514, upon operation of a limit switch LS 7, is lowered by the vertical cylinder C102 into the container boat 516. When the limit switch LS 7 is actuated, a time delay is started after which the vacuum through the eductors 517 is turned off for releasing the pellet workpieces in a layer position within the container boat 516, as shown in Figures 1A and 1B. The transfer head 514 is then raised by the vertical cylinder C102 and returned by the horizontal cylinder C101 to the leftmost original position for loading pellet workpieces as shown in Fig. 1A. This operational cycle is repeated for each pellet workpiece layer deposited within the container boat 516, until the boat 516 is filled with a predetermined number of layers. When the last layer of pellet workpieces is deposited within the container boat 516, a cam 520 positioned along an arm 522 carried by the support member 511 is no longer operative with limit switch LS 11 to indicate that the container boat 516 has received said predetermined number of layers of pellet workpieces, at which time the boat 516 is released by the retaining cylinder C104 retracting the retaining member 524 out of position for holding the container boat 516 and the conveyor rollers 518 cause the container boat 516 to move to the right and out of the loading position. When a loaded boat 516 is released from the loading position, a cylinder C106 is operated to release the next empty boat 526 for movement on the conveyor rollers 518 into the loading position as determined by the retainer member 524 now lowered by the retaining cylinder C104.

The advantage offered by the present boat loading apparatus is that the shocks are significantly reduced and pellet workpieces are more gently handled so that the potential for pellet damage is reduced and the pellet workpieces can be placed in a closer packed array for increasing the loading density within each boat layer and hence the throughput capacity of the described pellet workpiece loading operation.

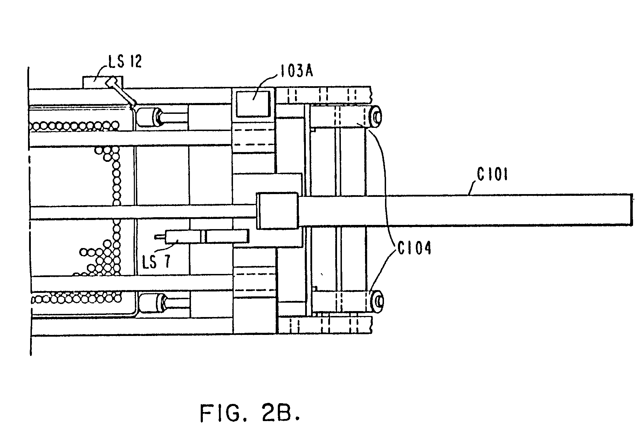

In Figs. 2A and 2B, there is shown a top view of the apparatus shown in Figs. 1A and 1B illustrating the pellet workpieces 500 which are fed down a loading chute 501 to fill a row on the holding tray 502. When an individual row of pellet workpieces is full, the end pellet workpiece hits the limit switch LS 0 to cause the pusher cylinder C100 to move and index the row of pellet workpieces to the right along the holder tray 502. Then the tray 502 is moved by the index motor 110 to provide a desired space between the successive rows of pellet workpieces on the tray 502. This operation is successively repeated each time a full row of workpieces is present and comes in contact with the limit switch LS 0. As the pusher 506 is moved by the cylinder C100 to the right, an extension 508 on the pusher 506 operates to block further workpieces from leaving the input feed chute 501 until the pusher 506 has returned back to the position shown in Fig. 2A and additional pellet workpieces 500 are then supplied to form another row which then comes in contact with the limit switch LS 0. When the holder tray 502 is in the home position to the left, the limit switch LS 4 is actuated. When the holder tray 502 has moved to the right a sufficient distance to accumulate a desired number of pellet workpiece rows on the tray 502, the cam 510 becomes operative with limit switch LS 2 for causing the index motor 110 to move the holder tray 502 to the right into the loading position as shown in Figs. 2A and 2B. When the loading position is reached, the cam 512 becomes operative with the limit switch LS 2 for causing the vertical cylinder C102 to lower the transfer head 514 down and into contact with the pellet workpieces accumulated on the holder tray 502. As the vertical cylinder C102 lowers the transfer head 514, the limit switch LS 6 is activated and turns on the airflow through the vacuum educators 517 as well known in this art to provide the desired vacuum for the orifice nozzles 515. After a predetermined time interval, the vertical cylinder C102 raises the transfer head 514 to lift the array of pellet workpieces off the holder tray 502, and the horizontal cylinder C101 becomes operative when the limit switch LS 5 is activated by the support member 511 reaching the uppermost position and operates to move the transfer head 514 to the right and into the loading position over the container boat 516. When the limit switch LS 7 is actuated by the support member 511, the vertical cylinder C102 becomes operative to lower the transfer head 514 into the container boat 516. After a predetermined time interval, the vacuum educators 517 no longer receive the airflow necessary to provide the vacuum for holding the pellet workpieces against the respective orifice nozzles 515, and the array of pellet workpieces are placed as a layer in the container boat 516. After another predetermined time interval, the transfer head 514 is raised by the vertical cylinder C102, and when the limit switch LS 5 is activated by the support member 541 reaching the uppermost position, the horizontal cylinder C101 moves the transfer head to the left and into the position shown in Fig. 1A. The described operating cycle repeats for each layer of pellet workpieces supplied and loaded into the container boat 516, with two basic workpiece handling operations being involved, one being the accumulation of the desired array of pellet workpieces on the holding tray 502 and the other being to pick up the array of pellet workpieces and transfer the workpieces for loading into the container boat 516.

The conveyor rollers 518 are operative with the rotating drive shaft 521, with each roller being coupled through an O-ring belt 523 such that if any roll or group of rolls 518 operative with a container boat are stopped by a container boat being held stationary, such as by the cylinder C106 operative with the holder 525 or by the cylinder C104 operative with the retaining member 524, the friction by the O-ring belt 522 is such that the individual conveyor rolls 518 can stop and the stopped rolls will idle while the drive shaft 521 keeps turning. This enables some container boats to be in motion and some container boats to be at rest on the same conveyor. When any group of rollers 518 are stopped and the others keep moving for the purpose of continuing the movement of container boats that are not stopped, such as by the holder 525 holding the next container boat and the retaining member 524 holding a boat 516 in the loading position.

When the transfer head 514 is lowered into the container boat 516, a well-known dashpot (not shown) can be provided on the vertical cylinder C102 exhaust such that the transfer head 514 makes a soft landing when it comes down and rests against any previous layers of pellet workpieces 500 that might already be positioned within the container boat 516.

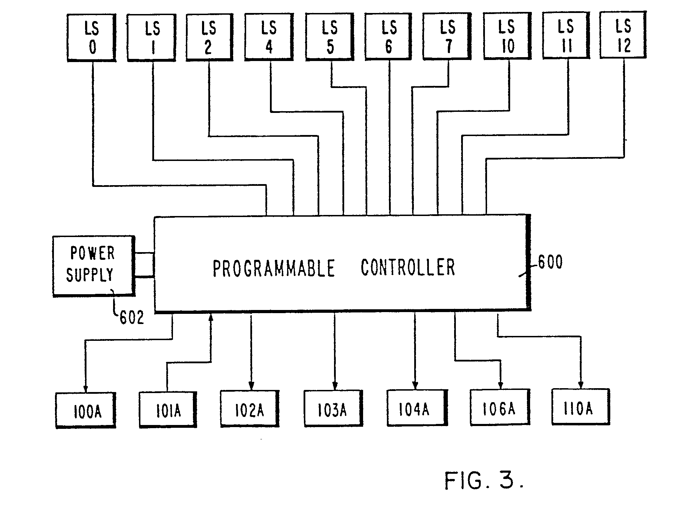

In Fig. 3, there is shown the programmable controller 600, which can be a Struthers-Dunn Model SD64 expander programmable controller that is presently available in the open market, and which is coupled between the input signal providing devices and the output actuators for the apparatus shown in Figs. 1A, 1B, 2A, and 2B. More specifically, the limit switch LS 0, which responds to a full row of pellet workpieces 500 from the input feed chute 501 and positioned on the holder tray 502 as shown in Fig. 2A, provides an input signal to the programmable controller 600 when a full row of pellet workpieces operates that limit switch LS 0. The limit switch LS 1 provides an input signal to the programmable controller 600 when the pusher 506 has moved a distance determined by the arm 508. The limit switch LS 2 provides a first input signal to the programmable controller 600 when the cam 510 operates with the limit switch LS 2 and provides a second input signal when the cam 512 becomes operative with the limit switch 2. The limit switch LS 4 provides an input signal to the programmable controller 600 when the holder tray 502 has returned to its home position as illustrated in Fig. 2A. The limit switch LS 5 provides an input signal to the programmable controller each time that the support member 512 reaches an uppermost position as shown in Fig. 1A. The limit switch LS 6 provides an input signal to the programmable controller when the vertical cylinder C102 lowers the transfer head 514 and the support member 541 coupled with that transfer head 514 operates the limit switch LS 6. The limit switch LS 7 provides an input signal to the programmable controller when the transfer head 514 is moved to the right by the horizontal cylinder C101 and reaches a loading position over the container boat 516 to be loaded. The limit switch LS 10 provides an input signal to the programmable controller when the transfer head 514 returns to the pellet workpiece pickup position as shown in Fig. 1A. The limit switch LS 11 provides an input signal to the programmable controller for each layer of pellet workpieces loaded into the container boat held by the retaining member 524, other than the last desired such layer of pellet workpieces 500. The limit switch LS 12 provides an input signal to the programmable controller when a new empty boat arrives and stops in the loading position as determined by the retainer member 524.

The programmable controller 600 provides an output signal to the actuator A 100 for determining the operation of the pusher cylinder C100, provides an output signal to the actuator 101A for determining the operation of the horizontal cylinder C101, provides an output signal to the actuator A 102 for determining the operation of the vertical cylinder C102, provides an output signal to the actuator A 103 for determining the operation of the vacuum educators 517, provides an output signal to the actuator A 104 for determining the operation of the retaining cylinder C104, provides an output signal to the actuator A 106 for determining the operation of the holding cylinder C106 and provides an output signal to the actuator A 110 for determining the operation of the tray index motor 110. The actuator A 110 can comprise a Slo-Syn preset indexer manufacture by the Superior Electric Company and available at the present time in the open market. A suitable power supply 602 is operative with the programmable controller as well known to persons skilled in this art.

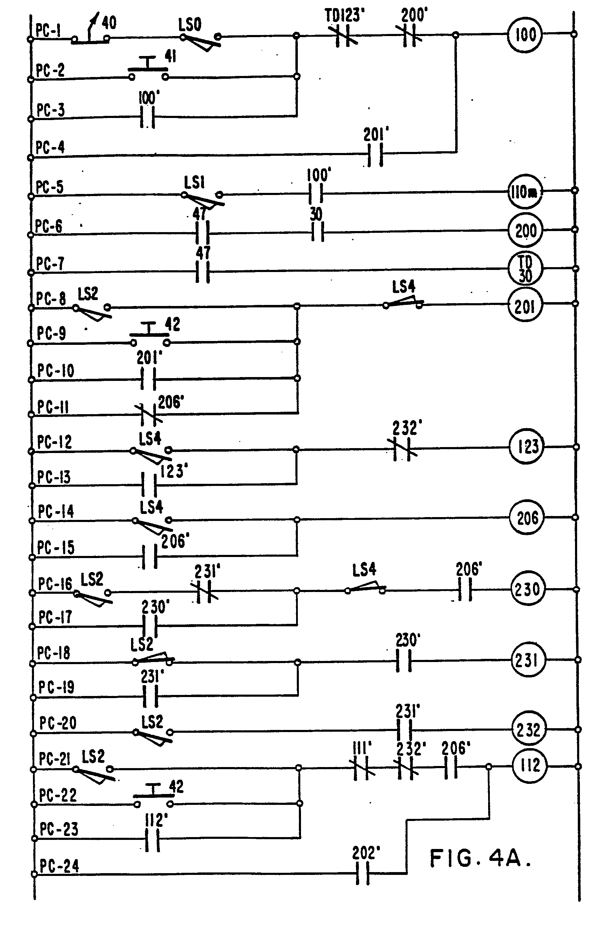

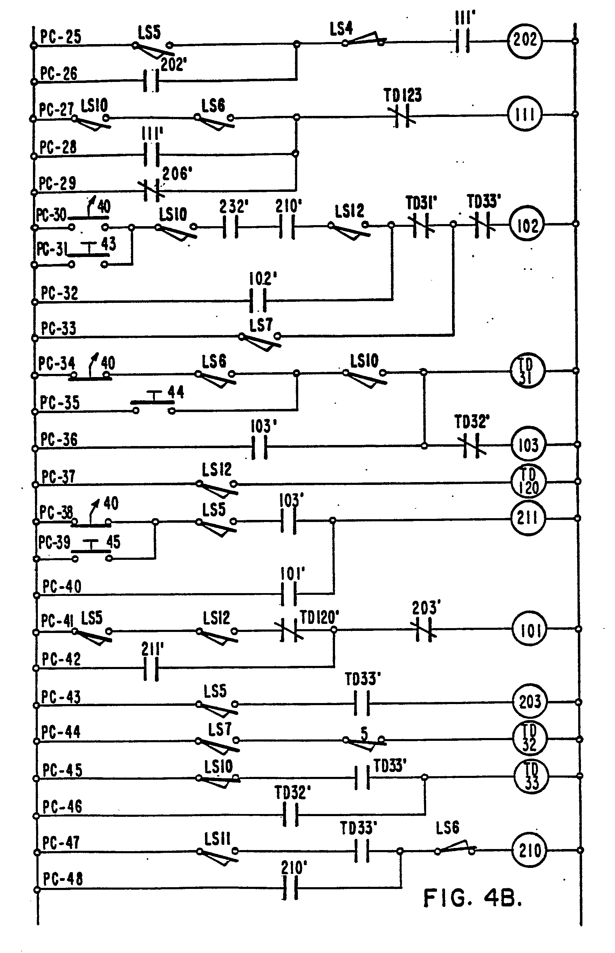

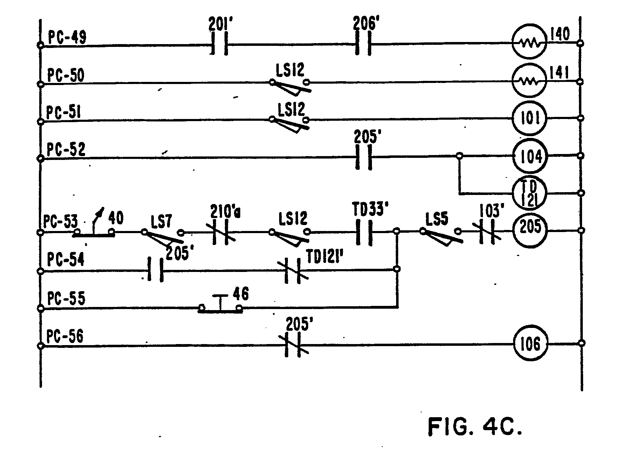

In Figs. 4A, 4B and 4C, there is shown the sequential control program suitable for operation with the programmable controller 600 shown in Fig. 3, and understandable by persons skilled in this particular art. Each line in the control program is intended to be operative with the power supply 602.

When an empty boat 516 first arrives in the loading position and is held by the retaining member 524 shown in Fig. 1B, the limit switch LS 12 is contacted and in program line PC 51 the horizontal cylinder C101 is energized to move the empty transfer head 514 to the right loading position over the empty container boat. This energizes the limit switch LS 7 to close and in program line PC 33 the vertical cylinder C102 will operate to lower the empty transfer head 514 into the empty boat held by the retaining member 524 to check out the boat. If the boat is warped or defective or already full of pellet workpieces, the transfer head 514 cannot enter the boat and therefore will not be considered acceptable for the loading of pellet workpieces. The position of the cam 520 along the arm 522 shown in Fig. 1A is then such that the cam 520 does not close the limit switch LS 11 and, in program line PC 47, an interlock 210 is not energized which leaves a contact 205' in program line PC 54 closed. If the limit switch LS 5 is closed, when the support member 512 reaches the uppermost position, the interlock 205 is energized and in program line PC 52 closes contact 205' to release the defective boat. This boat release operation is repeated as necessary for each succeeding boat until a satisfactory boat for loading pellet workpieces permits the transfer head 514 to be lowered into the boat and close the limit switch LS 11 by operation of the cam 520 and to indicate that the transfer head 514 was able to enter into a position within the boat held by the retaining member 524.

The program line PC 1 includes a manual or automatic selection switch 40 and the full row limit switch LS 0. When the pellet workpieces 500 are supplied by the input feed chute 501 to fill one row on the holder tray 502, the limit switch LS 0 is contacted by the end workpiece and closes to energize interlock 100 for the pusher cylinder C100 to advance the row of workpieces by a distance of about 2.5 cm on the holding tray 502. A contact TD 123' with a time delay of about one second within the controller 600 is normally closed, and contact 200' is an interlock within the controller 600 that is already indexed and timed out. Program line PC 2 includes a manual contact 41 that can be closed by the operator to manually advance a workpiece pellet row. Program line PC 3 includes the contact 100' that is closed when the cylinder C100 is energized. Program line PC 4 includes switch 201' of interlock 201 that responds to the tray 502 returning to the original position as shown in Fig. 2A and operating the limit switch LS4, as determined by program line PC 8.

When the cylinder C100 moves the pusher 506 forward to the right, the arm 508 attached to the pusher 506 will contact the limit switch LS 1 when the desired advance of one row spacing distance is completed. Program line PC 5 through the now closed contact 100' will energize the index motor 110, through interlock 110M, through operation of the actuator A110 to advance the holding tray 502 by the same desired spacing distance of about 1 inch. When the index motor 110 stops running, it closes a contact 47 in program line PC 7 to energize a time delay TD 30 of about 1 second and to indicate the index move for a given row of workpieces is complete. After the time delay TD 30 has timed out, the switch 30 in program line PC 6 closes to energize the interlock 200 which opens the contact 200' in program line PC 1 and allows the cylinder C100 and pusher 506 to return to the initial starting position. The return of pusher 506 removes extension 507 from blocking the pellet workpiece path to allow more workpieces to feed onto the holding tray 502 until the limit switch LS 0 is again contacted. The previously described operation of program lines PC 1, PC 3, PC 7 are again repeated successively for each row of pellet workpieces until the tray 502 holds a desired matrix array of workpiece rows as determined by the cam 510 suitably positioned on arm 513, that is fastened to the tray 502 and senses when the tray 502 is in a predetermined advanced forward position to the right. The cam 510 closes the limit switch LS 2 which in program line PC 8 then activates the interlock 201 to indicate the tray 502 is full of the desired matrix array of pellet workpiece rows. The limit switch LS 4 is normally closed and opens only when the tray 502 returns to the home position to the left as shown in Fig. 1A. The tray 502 keeps going forward to the right until cam 512 closes the limit switch LS 2 a second time and the program line PC 16 actuates interlock 230 since the switch 206' is already closed. When switch 230' closes a program line PC 18 the interlock 231 is actuated, and in program line PC 20 the closed switch 231' actuates the interlock 232 to indicate the tray 502 is in its forward and rightmost position. The interlock 232 now opens switch 232' in program line PC 21 to stop the index motor 110 and the switch 102' closes in program line PC 32 to move the vertical cylinder C102 down for lowering the transfer head 514.

When the vertical cylinder C102 lowers the transfer head 514, the support member 541 is also lowered and hits limit switch LS 6, as the transfer head 514 is lowered down and against the pellet workpieces on the holding tray 502. The limit switch LS 6 in program line PC 34 initiates a time delay TD 31 of about 4 seconds and turns on the vacuum through operation of valve switch 103' in program line PC 36. This time delay TD 31 is made sufficient to pick up all of the pellet workpieces on the tray 502. After this time delay TD 31 the support member is raised in program line PC 30, when the contact TD 31' opens, and a support member 541 hits limit switch LS 5 when the transfer head 514 is in its uppermost position.

The limit switch LS 5 in program line PC 41 energizes the interlock 101 for the horizontal cylinder C101 to move the transfer head 514 to the right. The empty boat 516 carried by the conveyor rollers 518 is already in position as determined by the retaining cylinder C104 and closes the limit switch LS 12. When the transfer head 514 moves to the right in the proper loading position, the limit switch LS 7 will close and in program line PC 33 the interlock 102 for the vertical cylinder C102 will operate to lower the transfer head 514. In addition, when the limit switch LS 7 closes in program PC 44 this starts the time delay TD 32 of about 4 seconds, which times out to give an adequate time for the transfer head 514 to each a position inside the boat 516, and then turns off the vacuum holding the pellet workpieces against transfer head 514. When time delay contact TD 32' closes in program line PC 46, this starts the time delay TD 33 of about 5 seconds which determines how long the transfer head 514 remains in the lower position within the boat 516 before starting back up when contact TD 33' opens in program line PC 30.

The support member 541 hits limit switch LS 5 when the upper position of the transfer head 514 is reached and in program line PC 42 the interlock 101 for the horizontal cylinder C101 is energized to move the transfer head 514 to the left and as shown in Fig. 1A.

The above-described cycle of operation is repeated sucessively for loading the boat 516 with respective layers of pellet workpieces, until the desired top layer of pellet workpieces is deposited in the boat 516. The limit switch LS 11 is closed by the cam 520 on arm 522 each time the transfer head is lowered into the boat 516 other than for the last desired layer of pellet workpieces, and in effect, provides a count of the pellet workpiece layers in the boat 516. In program line PC 47 since contact TD 33' is closed, when limit switch LS 11 is actuated interlock 210 is energized. In program line PC 53 contact 210' is normally closed but opens when interlock 210 is energized and this de-actuates interlock 205. For the last desired pellet workpiece layer in the boat 516 the cam 520 does not close the limit switch LS 11, so in program line PC 47 for this last layer of pellet workpieces the interlock 210 is not energized, which leaves contact 205' in program line PC 54 closed and when the limit switch LS 5 is closed after depositing this last desired layer and the support member 541 is again in the uppermost position, this energizes the interlock 205 which in program line PC 52 operates to close switch 205b to release the boat 516 full of pellet workpiece layers. In program line PC 52 when contact 205' closes, the boat 516 is released by energizing the retaining cylinder C104. In addition, a time delay TD 121 of about 3 seconds is energized to hold back the retaining cylinder C104 by the program line PC 54 which keeps contacts TD 121' closed until after the time delay and this keeps contact 205' in program line PC 52 closed to hold the cylinder C104 retracted and away from holding the full boat 516 and away from obstructing the removal of a full boat. After the time delay TD 121 times out, the cylinder C104 again lowers the retaining member 524 into the boat holding position. When the interlock 205 is actuated to close the contact 205' in program line PC 52 and to release the full boat 516 that is held by the retaining member 524, the contact 205' in program line PC 56 opens to release the cylinder C106 holding the next empty boat 526 to be filled. The conveyor speed is such that the cylinder C104 will lower the retaining member 524 into boat holding position before the next empty boat 526 arrives into the pellet workpiece loading position and comes into contact with the retaining member 524.

When the next boat 526 contacts the limit switch LS 12', in program line PC 51 the horizontal cylinder C101 is energized to move the empty transfer head 514 to the right loading position above the empty boat. The limit switch LS 7 will then close and in program line PC 33 the vertical cylinder C102 will operate to lower the empty transfer head 514 into the next empty boat. If the next boat is warped or already full of pellet workieces such that the transfer head 514 cannot enter into the next boat, and therefore the loading of pellet workpieces would not be satisfactory, the cam 520 does not close the limit switch LS 11 and in program line PC 47 the interlock 210 is not energized which leaves the contact 205a' in program line PC 54 closed. When the limit switch LS 5 is closed upon the support 512 reaching the uppermost position, the interlock 205 is energized and in program line PC 52 operates to release the defective next boat.

On the program line PC 9, the switch 42 provides a manual override for limit switch LS 2 to run tray forward manually.

On the line PC 10, the contact 201a' holds in

interlock 201 when limit switch LS 2 opens.

On line PC 11, the interlock contact 206a' energizes interlock 201 when the limit switch LS 2 is open.

On line PC 12, when the tray returns to close limit switch LS 4 this initiates time delay 123 of about one second to delay before clearing pellet entry.

On line PC 13, interlock contact 123a' maintains the time delay 123 when limit switch LS 4 is open.

On line PC 14, the limit switch LS 4 assures that the tray is back.

On line PC 15, the interlock contact 206b maintains interlock 206 with limit switch LS 4 open.

On line PC 20, with limit switch LS 2 closed, the internal switch 232 is made to deenergize the servo motor 110 when tray is forward.

On line PC 21, when limit switch LS 2 is closed along with contact 206' (held in from PC line 15) the servo motor 110 is energized to run the tray forward.

On line PC 22, switch 42 provides a manual override for limit switch LS 2.

On line PC 23, contact 112a is provided to override hold in interlock 112 when limit switch LS 2 opens.

On line PC 24, contact 202a' is provided to run servo in reverse and return tray from loading position.

On line PC 25, with head up, the limit switch (LS 5) is closed and the tray moved forward closing contact 111', interlock 202 is energized to run servo motor 110 in reverse to return the tray.

On line PC 26, interlock contact 202' maintains interlock 202 with limit switch LS 5 opened.

On line PC 27, with transfer head in home position and vertical cylinder energized (LS 6) after time delay (TD 123) interlock 111' is energized to run servo motor 110 in reverse to return tray to original position.

On line PC 28, interlock contact 111' maintains interlock 111 energized when limit switch LS 6 drops out.

On line PC 29, interlock contact 206' maintains interlock 111 energized until tray is in original position.

On line PC 37, time delay (TD 120) of about one second is energized when empty boat reaches loading position to close limit switch (LS 12).

On line PC 38, with transfer head up the limit switch (LS 5) is closed and vacuum on with contact 103' closed and interlock 211 is energized to maintain horizontal cylinder (101) when limit switch LS 5 drops out (line 42).

The pellet workpiece containing boats cost several hundred dollars each and are made of molybdenum material that becomes very brittle at the high temperatures of a typical sintering furnace. The pellet workpieces in the boat pass through such a furnace at a temperature of about 1800°C. After several such passes through the sintering furnace, the boat walls may crack such that the boat becomes unsatisfactory for continued use for high-temperature sinter firing of green pellet workpieces.

In addition, periodic sample testings of the sintered pellet workpieces from a particular boat are made to determine if the sintered pellet workpieces have a desired predetermined density, such as a density of 95% ± 1%. If the density of those sintered pellet workpieces is below that desired density, the whole boat that is sampled is put back on the same conveyor and recycled back through the furnace for another sintering operation. Since the workpieces do not meet the desired sintering specification, the whole boat of pellet workpieces comes back around on the same conveyor so at a given time the conveyor may have empty boats mixed together with loaded boats. The conveyor includes side rails for holding the boats aligned with the transfer head loading operation. The boats are about 22.5 cm by about 16.5 cm, and each boat is positioned in the 22.5 cm direction along the conveyor, with the side rails containing each boat in this manner. The conveyor is a well-known live roller conveyor, so each boat will move by itself unless the boat is stopped.

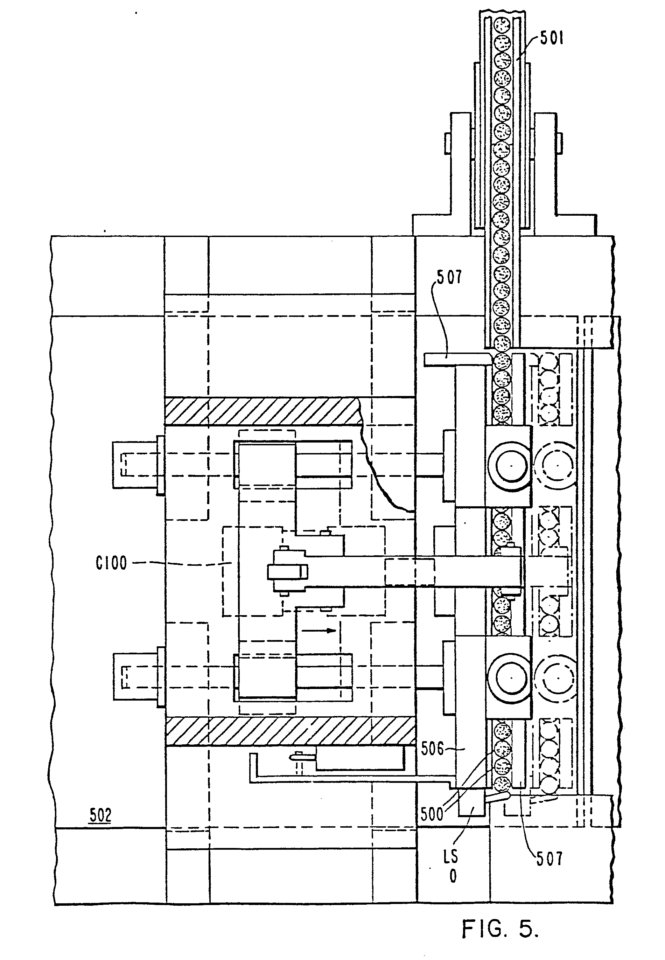

In Fig. 5 there is shown a top view of the input feed chute 501, the pusher 506, the pellet workpieces 500 on the holder tray 502, with a full row of pellet workpieces 500 being provided such that the limit switch LS 0 is contacted. The extension 508 on the pusher 506 is illustrated and becomes operative when the pusher moves to the right to move the row of pellets into the phantom location on the holder tray 502, and at this time the extension 508 prevents the further input of additional pellet workpieces from the input feed chute 501. The wall 507 is shown defining the pellet workpiece row between the wall 507 and the pusher 506.

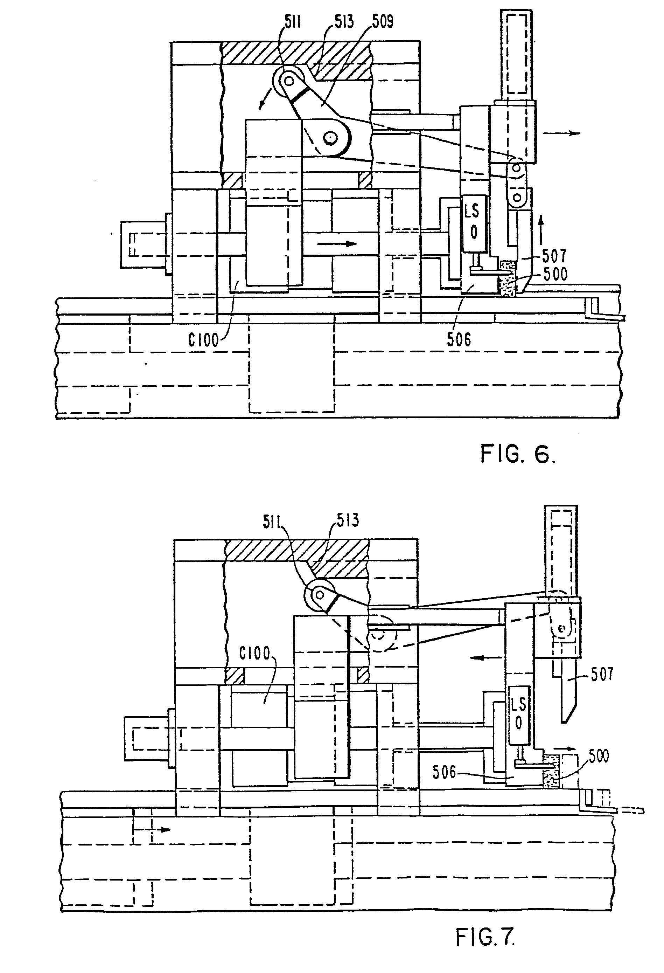

Fig. 6 shows a side view of the apparatus shown in Fig. 5 and illustrates the operation of the wall 507 to rise out of the way to permit the pellet workpieces 500 to move to the right when the cylinder C100 is actuated to move the pusher 506 to the right. The wall position control arm 509 is shown including a roller member 511 operative with a lifting cam 513 for raising the wall 507 up above the pellet workpieces 500.

Figure 7 shows the apparatus of Fig. 6 with the wall 507 raised above the pellet workpieces 500 and with the roller 511 being moved by the cam 513 for this purpose when the cylinder C100 moves the pusher 506 to the right.

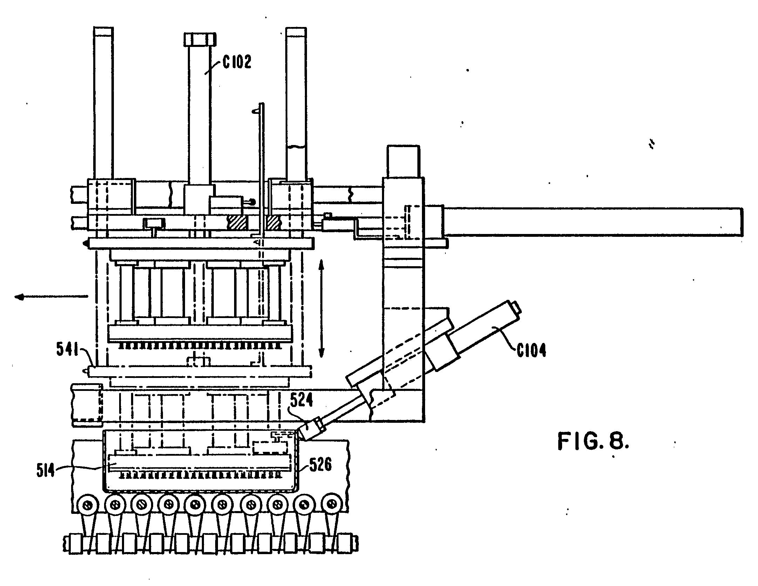

Fig. 8 shows the transfer head 514 lowered into an empty container boat 526, which has traveled from the position shown in Fig. 1A and is held in the loading position by the retaining member 524.

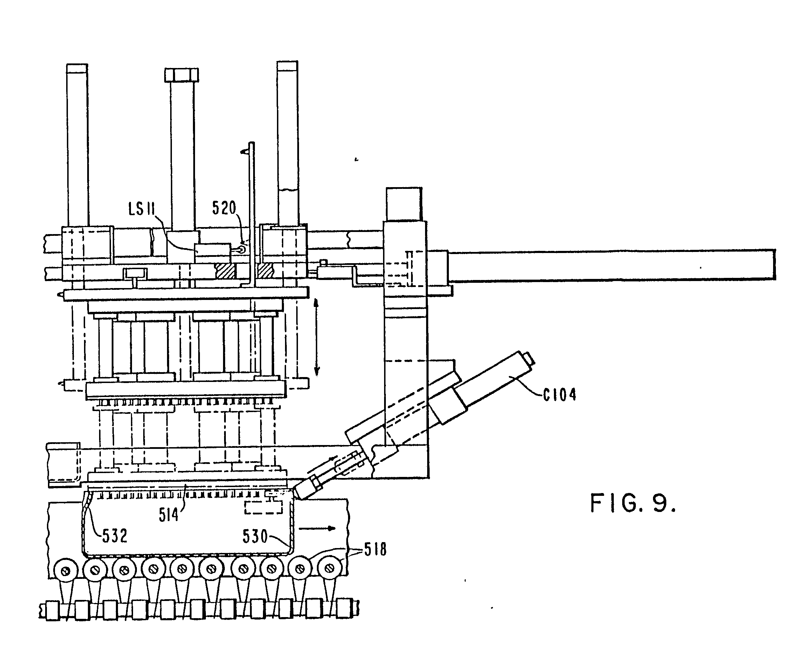

Fig. 9 shows a warped empty container boat 530 held in the loading position by the retaining member 524. A warped side 532 of the boat prevents the transfer head 514 from entering the boat 530. The cam 520 is shown in phantom as not actuating the limit switch LS 11 when the transfer head 514 cannot enter the boat 530, so the control program operation will actuate the retaining cylinder C104 to raise the retaining member 524 and the conveyor rollers 518 will move the defective boat 530 to the right and away from the loading position.

It shall be understood that the illustrated cylinders C100, C101, C104 and C106 can be either hydraulic or pneumatic in operation, with the corresponding actuators A100, A101, A102, A104 and A106 being-solenoid operated valve devices, which are well known to persons skilled in this art.

## Claims

1. An apparatus for receiving nuclear fuel green pellets (500) from an input supply (501) and for loading those pellets into a container (516) for passing the pellets in said container through a sintering furnace, characterized by sensing means (520, LS 11) for checking the dimensions of the container to establish that the container is empty and not warped from earlier passes through the furnace, means (LS 1, 110) including a holding member (502) for collecting a plurality of pellet rows on said holding member with a plurality of pellets in each said row, means (510, LS 2, 514, C102, 515, LS 5, C 101) for moving said plurality of pellet rows into said container so as to provide a layer of pellets within the container and means (520, 522, LS 11) responsive to a desired number of operations of said pellet row moving means for releasing said container to permit its movement away from said apparatus when a predetermined number of pellet layers is provided within the container.

2. An apparatus as claimed in claim 1, characterized in that said dimension sensing means includes means (C 104, 524) for holding the container in a predetermined position relative to said green pellet collecting means.

3. An apparatus as claimed in claim 1, characterized in that said dimension sensing means is operative to determine whether the container is empty to establish that said container will accept a predetermined number of green pellets, said dimension sensing means (LS 5, 205, 205') providing for the release of a defective container before pellets are deposited therein.

4. An apparatus as claimed in claim 1, 2, or 3, characterized in that said green pellet collecting means is operative to provide an array of pellets on said holding member, and said pellet moving means provides said array of pellets as a layer within the container.

5. An apparatus as claimed in any of claims 1 to 4, characterized in that said pellet moving means includes a transfer head (514) operative to lift said plurality of pellets from the holding member and to transfer that plurality of pellets as said layer into the container.

6. An apparatus as claimed in any of claims 1 to 5, characterized by means (518) for moving an empty container member into a predetermined position in relation to the pellet transfer means and removing that container member when the desired number of pellet layers is provided within that container.

## Revendications

1. Dispositif destiné à recevoir des pastilles crues (500) de combustible nucléaire venant d'un système d'alimentation (501) et à charger ces pastilles dans un récipient pour les faire passer dans un four de frittage, caractérisé en ce qu'il comporte des moyens (520, LS 11) de détection pour contrôler les dimensions de ce récipient permettant de s'assurer que le récipient est vide et qu'il n'a pas subi des déformations lors de ses passages antérieurs dans le four ; un moyen (LS 1, 110) comprenant un élément (502) de maintien pour rassembler une pluralité de rangées de pastilles sur cet élément de maintien, chaque rangée comportant une pluralité de pastilles; des moyens (510, LS2, 514, C102, 515, LS5, C101) pour transférer cette pluralité de rangées de pastilles dans le récipient de manière à y constituer une couche de pastilles; et des moyens (520, 522, LS11) fonctionnant en liaison avec un nombre souhaité d'opérations de ces moyens de transfert des rangées de pastilles pour dégager ce récipient de manière à ce qu'il puisse s'éloigner du dispositif lorsqu'un nombre prédéterminé de couches de pastilles auront été déposées dans le récipient.

2. Dispositif suivant la revendication 1, caractérisé en ce que ces moyens de détection des dimensions comprennent des moyens (C104, 524) pour maintenir le récipient dans une position prédéterminée par rapport à ce dispositif de rassemblement des pastilles crues.

3. Dispositif suivant la revendication 1, caractérisé en ce que ces moyens de détection des dimensions fonctionnent de manière à déterminer si le récipient est vide afin de s'assurer que ce dernier acceptera un nombre prédéterminé de pastilles crues, ces moyens (LS5, 205, 205') de détection des dimensions permettant l'évacuation d'un récipient défectueux avant que des pastilles n'y soient déposées.

4. Dispositif suivant l'une quelconque des revendications 1, 2 ou 3, caractérisé en ce que ce moyen de rassemblement des pastilles crues fonctionne de manière à assurer un arrangement de pastilles sur l'élément de maintien; et en ce que ce moyen de déplacement des pastilles fournit ces pastilles disposées sous forme d'une couche é l'intérieur du récipient.

5. Dispositif suivant l'une quelconque des revendications 1 à 4, caractérisé en ce que ce moyen de déplacement des pastilles comporte une tête (514) de transfert fonctionnant de manière à soulever cette pluralité de pastilles de l'élément de maintien et à les transférer sous forme d'une couche dans le récipient.

6. Dispositif suivant l'une quelconque des revendications 1 à 5, caractérisé en ce qu'il comporte un moyen (518) pour déplacer un récipient vide jusqu'à un emplacement prédéterminé par rapport au moyen de transfert des pastilles et pour retirer ce récipient lorsque le nombre souhaité de couches de pastilles sont déposées à l'intérieur du récipient.

**Patentansprüche**

1. Trogbeladegerät für Kernbrennstofftablettenbehälter, mit dem ungebrannte Tabletten von einer Zuliefergungseinrichtung (501) abgenommen und in den Behälter (516) zum Durchlauf durch einen Sinterofen eingesetzt werden, gekennzeichnet, durch eine Abtasteinrichtung (520, LS11) für die Überprüfung der Behälterabmessungen zur Sicherstellung, dass der Behälter leer and nicht von einem vorhergehenden Sinterofendurchlauf verzogen ist, einer Sammeleinrichtung (LS1, 110) mit einem Halteteil (202) zur Aufnahme von aus einer Vielzahl von Tabletten bestehenden Tablettenreihen, einer Umsetzvorrichtung (50, LS2, 514, C102, L35, C101) zum Einfüllen der Reihen von Tabletten in den Behälter um im Behälter eine Schicht von Tabletten herzustellen, und eine Kontrolleinrichtung (520, 522, LS11) die in Abhängigkeit von einer gewünschten Anzahl von Tablettenreihenumsetzvorgängen den Behälter freigibt, sodass er weiter befördert werden kann, wenn eine bestimmte Anzahl von Tablettenschichten in den Behälter eingefüllt sind.

2. Gerät nach Anspruch 1, dadurch gekennzeichnet, dass die Abtasteinrichtung für die Überprüfung der Behälterabmessungen eine Haltevorrichtung (C206, 526) zum Festhalten der Behälter in einer vorgegebenen Lage relativ zur Sammeleinrichtung für die ungebrannten Tabletten aufweist.

3. Gerät nach Anspruch 1, dadurch gekennzeichnet, dass die Behälterabtasteinrichtung, die feststellen kann, ob der Behälter leer und für eine bestimmte Anzahl von ungebrannten Tabletten aufnahmefähig ist, so eingerichtet ist, dass die die Freigabe eines schadhaften Behälters bewirkt, befor Tabletten eingeführt sind.

4. Gerät nach Anspruch 1, 2 oder 3, dadurch gekennzeichnet, dass die Sammeleinrichtung für die ungebrannten Tabletten den Aufbau einer bestimmten Tablettenanordnung auf dem Halteteil erlaubt, worauf die Tablettenumsetzvorrichtung die gegebene Tablettenanordnung in den Behälter überträgt.

5. Gerät nach Ansprüche 1 bis 4, dadurchgekennzeichnet, dass die Tablettenumsetzvorrichtung einen Umsatzkopf (512) aufweist, der die Vielzahl von Tabletten von der Sammeleinrichtung abheben und als Tablettenschicht in den Behälter einsetzen kann.

6. Gerät nach einem der Ansprüche 1 bis 5, gekennzeichnet durch eine Einrichtung (518) zum Bewegen eines leeren Behälters in eine vorgegebe Lage relative zur Tablettenumsetzvorrichtung und zum Wegtransport des Behälter wenn die gewünschte Anzahl von Tablettenschichten in den Behälter eingelagert ist.

FIG. IA.

FIG. 1B.

FIG. 2A.

FIG. 2B.

FIG. 3.

FIG. 4A.

FIG. 4B.

FIG. 4C.

FIG. 5.

9

FIG. 6.

FIG.7.

FIG. 8.

FIG.9.